Europäisches Patentamt

European Patent Office

Office européen des brevets

(19)

(11) **EP 1 223 701 B1**

(12) **FASCICULE DE BREVET EUROPEEN**

(45) Date de publication et mention
de la délivrance du brevet:
**18.02.2004 Bulletin 2004/08**

(51) Int Cl.⁷: **H04L 1/00**, H04L 27/34

(21) Numéro de dépôt: **01403327.8**

(22) Date de dépôt: **20.12.2001**

(54) **Procédé pour transmission et la reception de signaux codés utilisant un code produit et modulés en QPSK**

Verfahren zum Senden und Empfangen von produktkodierten und QPSK-modulierten Signalen

Method for transmitting and receiving product coded QPSK modulated signals

(84) Etats contractants désignés:
**AT BE CH CY DE DK ES FI FR GB GR IE IT LI LU MC NL PT SE TR**

(30) Priorité: **15.01.2001 FR 0100464**

(43) Date de publication de la demande:
**17.07.2002 Bulletin 2002/29**

(73) Titulaire: **ALCATEL**
**75008 Paris (FR)**

(72) Inventeur: **Fang, Juing**
**94300 Vincennes (FR)**

(74) Mandataire: **Smith, Bradford Lee et al**
**Compagnie Financière Alcatel,**
**Département de Propriété Industrielle,**
**5, rue Noel Pons**
**92734 Nanterre Cedex (FR)**

(56) Documents cités:
**EP-A- 0 716 529         EP-A- 0 780 987**

• **CAVALEC-AMIS K ET AL: "Block turbo codes for space-time systems" GLOBECOM '00 - IEEE. GLOBAL TELECOMMUNICATIONS CONFERENCE, vol. 2, 27 novembre 2000 (2000-11-27) - 1 décembre 2000 (2000-12-01), pages 1021-1025, XP002174801 IEEE, Piscataway, NJ, USA ISBN: 0-7803-6451-1**
• **SANDEEP RAJPAL ET AL: "PRODUCT CODED MODULATION" PROCEEDINGS OF THE GLOBAL TELECOMMUNICATIONS CONFERENCE (GLOBECOM)., vol. 4, 29 novembre 1993 (1993-11-29) - 2 décembre 1993 (1993-12-02), pages 7-11, XP000428396 IEEE, NEW YORK, USA**

## Description

L'invention concerne un procédé pour transmettre des signaux numériques en modulation de phase à quatre états ainsi qu'une modulation combinée d'amplitude et de phase à seize états.

Pour transmettre des signaux numériques, on utilise couramment la modulation de phase à quatre états qui consiste à représenter un couple de chiffres binaires par la phase d'un signal sinusoïdal par rapport à une référence.

Étant donné qu'un nombre à deux chiffres binaires peut prendre quatre valeurs, les phases peuvent différer de $\pi/2$ radians. Par exemple, un signal présentant un déphasage de $\pi/4$ radians par rapport au signal de référence correspond au nombre 00. Un signal déphasé de $3\pi/4$ par rapport à la référence représente le nombre 01, le signal déphasé de $5\pi/4$ par rapport à la référence représente le nombre 11 et le signal déphasé de $7\pi/4$ par rapport à la référence représente le nombre 10. Une telle correspondance entre le couple de chiffres binaires et les déphasages, dans laquelle, pour chaque incrément de $\pi/2$ un seul chiffre binaire est modifié est appelée correspondance de Gray. D'autres correspondances sont possibles, par exemple la correspondance naturelle par valeurs croissantes des nombres, la succession des nombres binaires étant alors 00, 01, 10 et 11.

La modulation de phase à quatre états est souvent dénommée QPSK, c'est-à-dire "Quarter Phase Shift Keying" en langue anglaise.

En réception, il faut connaître la référence de phase, c'est-à-dire savoir distinguer entre les quatre valeurs de phases transmises, par exemple, $\pi/4$, $3\pi/4$, $5\pi/4$ et $7\pi/4$ ou 0, $\pi/2$, $\pi$ et $3\pi/2$. Le procédé le plus simple pour récupérer la référence, c'est-à-dire lever l'ambiguïté de phase, consiste à émettre périodiquement un symbole connu, c'est-à-dire constitué de bits de valeurs prédéterminées. L'inconvénient de ce procédé est qu'il ne permet pas de corriger les erreurs dues au bruit, inévitable, des transmissions et qui a pour conséquence de produire des sauts de phases entre deux émissions de symboles connus.

Un autre procédé, relativement complexe, consiste à détecter les erreurs de décodage et à commander des rotations de phase par incréments de $+\pi/4$ afin de déterminer quelle est la phase correcte. Ce procédé nécessite un temps de traitement non négligeable qui n'est pas compatible avec une transmission en temps réel par paquets car le temps de traitement entraîne des pertes d'informations.

Le procédé fournissant les meilleurs résultats consiste à affecter les données transmises d'un code correcteur d'erreurs et à corriger les erreurs non pas simultanément à la transmission, comme dans les procédés connus, mais ultérieurement, après le décodage proprement dit.

Les codes correcteurs d'erreurs les plus efficaces sont les codes produits ou turbocodes. De tels codes sont présentés, par exemple, dans la référence suivante: 'Block turbo codes for space-time systems'. Cavalec-Amis K. et al. IEEE Global Telecommunications Conference. 27 novembre 2000 - 1 décembre 2000. Pour former un code produit, on assemble des chiffres binaires à transmettre selon une matrice à L lignes et C colonnes et les lignes et les colonnes sont codées par bloc, c'est-à-dire qu'à chaque ligne comportant C bits d'information, on ajoute (K- C) bits de correction d'erreurs ou bits de parité et, de même, à chaque colonne comprenant L bits d'information, on ajoute P - L bits de correction. Si une ligne est complètement erronée, les bits de parité de cette ligne ne permettront pas la correction ; par contre, la ligne erronée pourra être corrigée grâce aux bits de parité en colonnes car dans chaque colonne un seul bit est erroné.

Toutefois, ces turbocodes ne sont pas utilisables pour la modulation QPSK car les turbocodes connus jusqu'à présent sont tels que les décodages sont affectés par les rotations de phase. Autrement dit, les codes correcteurs d'erreur de type turbocode connus jusqu'à présent ne sont pas transparents aux rotations de phase et ne peuvent donc pas être utilisés pour la transmission QPSK.

L'invention fournit des codes correcteurs d'erreur de type turbo ou produits pour des signaux modulés QPSK et qui sont insensibles aux rotations de phases. L'invention fournit donc un turbocode pour la modulation QPSK qui est transparent aux rotations de phases.

Selon un premier mode de réalisation de l'invention, pour le codage, les deux bits, I et Q, d'un symbole QPSK à transmettre sont disposés sur des lignes différentes, mais sur la même colonne, et de façon telle que chaque ligne ne comporte qu'un seul type de bit, I ou Q, le codage pour la correction d'erreur étant effectué, d'une part, ligne par ligne et, d'autre part, par paire de colonnes adjacentes, les bits I de codage de deux colonnes adjacentes associées étant déduits des bits I de ces deux colonnes et, de même, l'ensemble des bits Q de codage de ces deux colonnes adjacentes associées étant déduit des bits Q de ces colonnes, ces bits de codage étant disposés de la même façon que les bits de départ, c'est-à-dire de manière que chaque ligne ne comporte qu'un seul type de bit, I ou Q, les couples de bits de codage I et Q adjacents sur une même colonne étant transmis également comme des symboles.

On constate qu'avec un tel codage si, par exemple, on fait appel à des symboles de type Gray, une rotation de $\pi$ inverse les bits (un bit 1 devient un bit 0 et un bit 0 devient un bit 1). Ainsi, la matrice reste toujours dans la même famille de lignes et de colonnes, ce qui permet, de façon en soi connue, de corriger les erreurs.

Lorsqu'il se produit une rotation de $\pi/2$, les lignes I deviennent des lignes Q et les lignes Q deviennent des lignes I inversées. Les mots de lignes et de colonnes ainsi obtenus avec une rotation de $\pi/2$ restent

respectivement dans les codes de lignes et de colonnes, ce qui permet de les décoder correctement. On montre, de même, qu'une rotation de $3\pi/2$ entraîne que les lignes I deviennent des lignes Q inversées et que les lignes Q deviennent des lignes I. Dans ces conditions, les mots de lignes et de colonnes peuvent être décodés correctement.

Ainsi, dans le cas de symboles QPSK de type Gray, le premier mode de réalisation de codage est transparent aux rotations de $\pi$, $\pi/2$ et $3\pi/2$, c'est-à-dire pour toutes les rotations. On montre aussi que ce codage présente les mêmes propriétés pour une succession naturelle des symboles QPSK. Ce codage est donc totalement transparent aux rotations, ce qui permet ainsi un décodage correct.

Dans un second mode de réalisation de l'invention, pour le codage des symboles à transmettre, on dispose les deux bits I et Q d'un symbole QPSK sur une même ligne, chacune de ces lignes étant ainsi formée de couples de bits I et Q, les lignes et les colonnes étant disposées de façon telle que dans chaque colonne, les bits I et Q soient alternés, les lignes et les colonnes étant codées par paires adjacentes de façon telle que les bits de codage I soient dérivés des bits de codage I de deux lignes ou colonnes adjacentes associées et que, de même, les bits de codage Q de ces deux lignes ou colonnes adjacentes soient dérivés seulement des bits Q de ces deux lignes ou colonnes , les bits de codage étant disposés comme les bits d'origine, les couples de bits I et Q de codage sur chaque ligne étant transmis comme les autres symboles QPSK.

Avec ce second mode de réalisation, une rotation de $\pi$ radians avec des symboles en succession naturelle ou de type Gray, se traduit par le fait que les bits I et les bits Q sont simplement inversés et, ainsi, les lignes et les colonnes restent toujours dans les mêmes codes, ce qui permet le décodage.

Une rotation de $\pi/2$ se traduit par le fait que des lignes I deviennent des lignes Q et les lignes Q deviennent des lignes I inversées. De façon générale, on montre que ce second mode de réalisation fournit un codage turbo transparent aux rotations de phase pour des symboles QPSK.

Les codages correcteurs d'erreurs selon l'invention sont utilisés pour la transmission de signaux. L'invention concerne aussi un procédé de réception de signaux affectés de codes correcteurs d'erreurs décrits ci-dessus et dans lequel on effectue le décodage afin de récupérer les symboles d'origines.

Les codages des symboles QPSK transparents aux rotations de phase sont utilisables, selon un autre aspect de l'invention (qui peut être utilisé indépendamment des autres aspects de l'invention), pour effectuer un codage turbo d'une modulation de phase et d'amplitude à seize états, dite QAM-16.

On sait qu'une telle modulation consiste à transmettre chacun des seize nombres à quatre bits par une phase et une amplitude déterminées d'une porteuse de fréquence donnée. Ainsi, avec la représentation classique dans le plan complexe, dans chaque quadrant on prévoit quatre points qui se distinguent par leurs positions, c'est-à-dire par leurs phases et/ou leurs amplitudes, chacun de ces quatre points représentant un nombre binaire à quatre bits.

Selon l'invention, dans chaque quadrant du plan complexe, on prévoit une répartition des quatre symboles QAM-16 telle que ces nombres binaires ont les mêmes deux derniers chiffres et les deux premiers chiffres forment des nombres différents : 00, 01, 11 et 10, et on répartit dans l'ensemble du plan complexe ces nombres en quatre sous-ensembles, chaque sous-ensemble étant formé par l'ensemble des nombres ayant les mêmes deux premiers chiffres binaires et, se trouvant donc dans les quatre quadrants différents, les coordonnées des symboles dans le plan complexe étant choisies de façon telle qu'après une rotation de $\pi/2$, chaque sous-ensemble prend la place d'un autre sous-ensemble.

Pour effectuer le codage de type produit d'un tel ensemble de symboles QAM-16, on effectue le codage par couple de bits, formant un symbole QPSK, de chaque symbole QAM-16, ce codage de symboles QPSK étant du type transparent aux rotations de phases et on transmet les données ainsi codées selon la répartition dans le plan complexe du type défini ci-dessus.

En variante, le codage d'un tel ensemble de symboles QAM-16 s'effectue bit par bit, à l'aide d'un code BPSK classique et transparent aux rotations de phase.

La modulation de phase et d'amplitude à seize états est utilisable pour la transmission d'informations. L'invention concerne aussi la réception d'informations modulées comme défini ci-dessus, la démodulation consistant à récupérer les symboles d'origines à partir des phases et des amplitudes des signaux reçus.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un procédé de modulation et de démodulation utilisant un procédé de codage conforme à l'invention,

la figure 2 est un diagramme montrant une modulation QPSK,

la figure 3 est un schéma expliquant un premier procédé de codage conforme à l'invention,

la figure 4 est un schéma analogue à celui de la figure 3 pour une variante,

la figure 5 est un schéma montrant une modulation QAM-16 selon l'invention, et

la figure 6 est un schéma de modulateur QAM-16 conforme à l'invention.

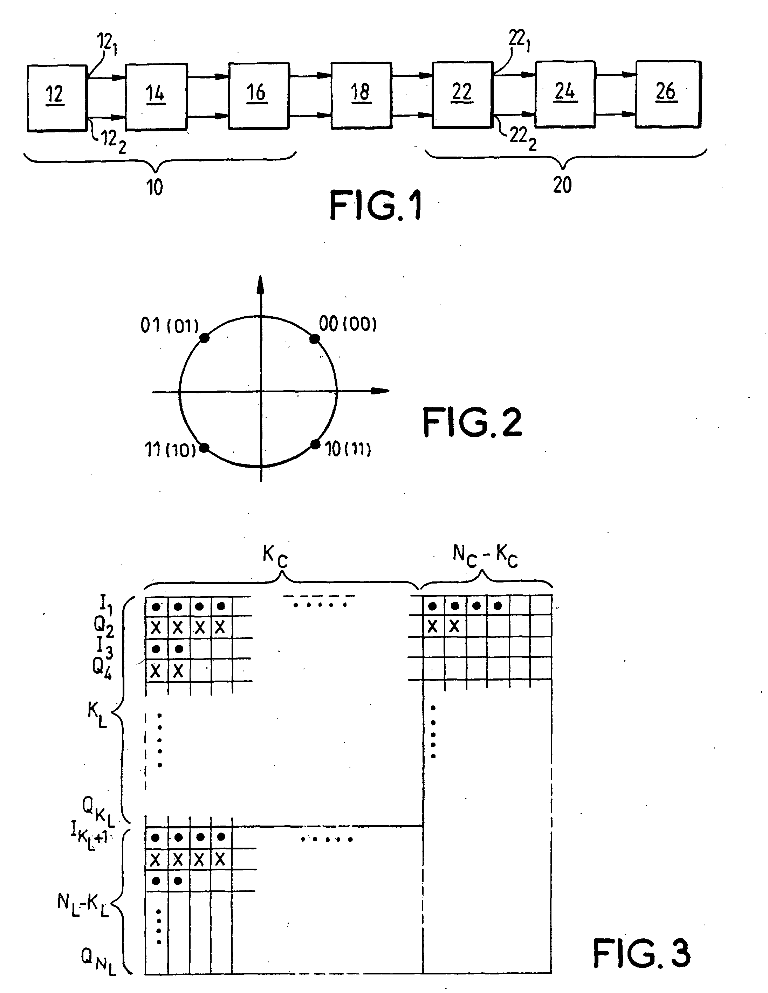

Pour transmettre des données binaires, la modulation de phase à deux états, ou modulation QPSK, consiste à transmettre une porteuse de fréquence déterminée et d'amplitude déterminée et à conférer quatre valeurs possibles à la phase de cette porteuse par rapport à une référence. Deux phases successives sont, dans le plan complexe représenté sur la figure 2, séparées par un écart angulaire de $\pi / 2$ radians. La première phase se trouve dans le premier quadrant, la seconde phase dans le second quadrant, la troisième phase dans le troisième quadrant et la quatrième dans le quatrième quadrant. Par exemple, la première phase est décalée de $\pi / 4$ radians par rapport à la référence, la seconde phase de $3 \pi / 4$, la troisième phase de $5 \pi / 4$ et la quatrième phase de $7 \pi / 4$. A chacune de ces phases, on associe deux chiffres binaires. Dans une correspondance, ou succession, de type Gray entre les phases et les chiffres binaires, ces derniers sont 00, 01, 11 et 10 quand on tourne dans le sens positif en partant du premier quadrant. On voit que, dans ce cas, un seul chiffre binaire est modifié à chaque fois qu'on progresse d'un pas. Dans une représentation de type dit naturel, représentée entre parenthèses sur la figure 2, les chiffres binaires progressent de la façon suivante : 00, 01, 10 et 11. Autrement dit, on fait progresser de façon naturelle, par ordre croissant, les nombres binaires correspondant aux couples de chiffres binaires.

Un couple (ou de façon plus générale un ensemble) de chiffres binaires est, habituellement, appelé un symbole.

Pour la démodulation, il faut déterminer la phase des signaux transmis par rapport à la porteuse de référence. Cette détermination n'est pas aisée en raison des bruits qui provoquent notamment des rotations.

La modulation et la démodulation est plus efficace si on transmet non pas des phases mais des différences de phases entre deux symboles consécutifs. Ainsi, en cas de rotation, la différence de phase entre deux symboles consécutifs ne sera pas changée. En outre, pour une transmission en temps réel, on prévoit que les données soient transmises avec un code correcteur d'erreur de façon que les erreurs soient corrigées uniquement à la réception. Le code correcteur d'erreur le plus efficace est le code produit ou turbocode. Mais, on a constaté qu'un tel code produit est affecté par les rotations de phase. Ainsi, l'invention fournit un code produit qui est insensible aux rotations de phase.

Avant de décrire en détail les codes produits conformes à l'invention, on décrit un modulateur et un démodulateur QPSK utilisés dans le cadre de l'invention.

Le modulateur 10 (figure 1) comprend un codeur différentiel 12 à deux dimensions destiné à fournir des symboles QPSK consécutifs. Ainsi, sur la première sortie $12_1$ du codeur 12, on obtient un premier bit I et sur la seconde sortie $12_2$, on obtient un deuxième bit Q de la différence entre deux symboles consécutifs.

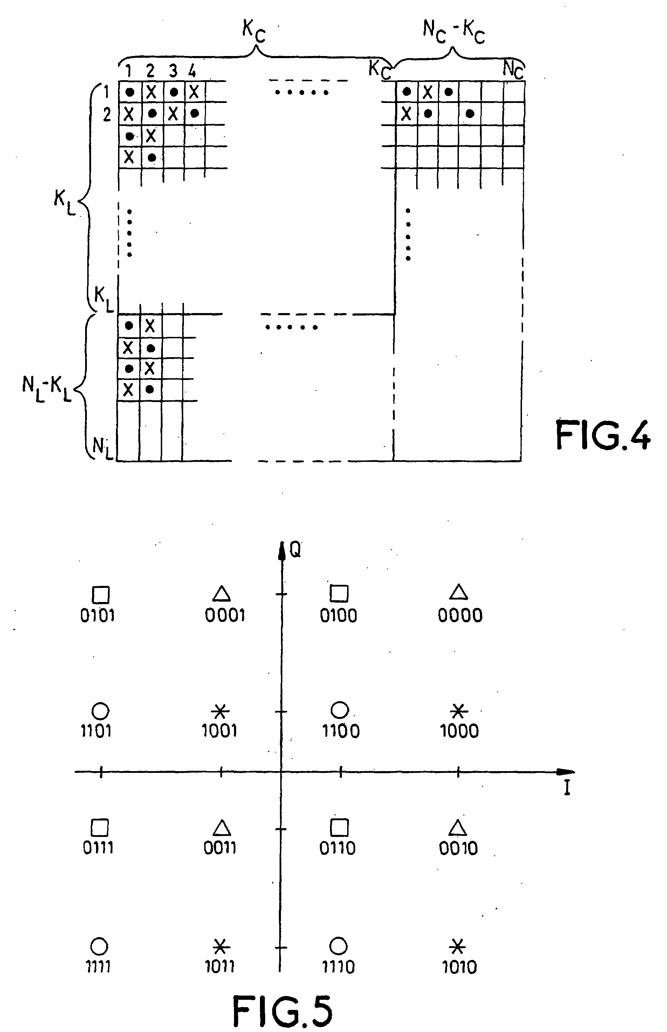

Les symboles fournis par le codeur 12 sont appliqués sur les entrées d'un codeur 14 de type produit conforme à l'invention et dont la fonction sera décrite plus loin notamment en relation avec les figures 3 et 4. Ce codeur 14 fournit un ensemble de symboles qui comprend, d'une part, les symboles appliqués sur son entrée et, d'autre part, des symboles supplémentaires qui sont utilisés pour la correction d'erreurs après transmission. Les symboles en sortie du codeur 14 sont transformés par un bloc 16 de modulation QPSK en des phases d'une porteuse et ces signaux modulés sont transmis par un canal, par exemple un canal hertzien 18.

A la réception, on prévoit un démodulateur 20 qui comprend un bloc 22 de démodulation QPSK qui reçoit les signaux du canal et qui délivre sur ses sorties $22_1$ et $22_2$ des symboles binaires qui sont appliqués aux deux entrées d'un décodeur 24 de codes produits afin de déterminer les symboles d'origine correspondant à la sortie du codeur 12. Les symboles de sortie du décodeur 24 sont appliqués à l'entrée d'un décodeur différentiel 26 à deux dimensions qui effectue l'opération inverse de celle effectuée par le codeur 12 et qui fournit donc sur sa sortie les symboles d'origine.

Pour que le bloc 22 de démodulation et le décodeur 24 ne soient pas affectés par les rotations de phase, il est nécessaire que le code produit utilisé soit transparent aux rotations de $\pi / 2$, $\pi$ et $3 \pi / 2$, c'est-à-dire qu'une telle rotation doit transformer chaque mot-code en un mot-code valable, c'est-à-dire faisant partie de la même famille.

On va maintenant décrire en relation avec le tableau I ci-dessous et avec la figure 3 un premier mode de réalisation d'un code produit pour des symboles QPSK et qui est transparent aux rotations de phases.

TABLEAU I

| $I_{11}$ | $I_{12}$ | $I_{13}$ | $I_{14}$ |
|---|---|---|---|
| $Q_{21}$ | $Q_{22}$ | $Q_{23}$ | $Q_{24}$ |
| $I_{31}$ | $I_{32}$ | $I_{33}$ | $I_{34}$ |
| $Q_{41}$ | $Q_{42}$ | $Q_{43}$ | $Q_{44}$ |

On rappelle tout d'abord que lorsqu'on dispose d'un ensemble de valeurs ou chiffres binaires, un code produit classique consiste à disposer les chiffres binaires selon des lignes et selon des colonnes et à ajouter à chaque ligne et à chaque colonne des bits supplémentaires qui seront utilisés pour la correction d'erreurs. Les codes par ligne ou par colonne sont appelés des codes-blocs. De tels codes étant bien connus, il n'est pas nécessaire de les décrire en détail.

L'avantage d'un code produit est de permettre la correction d'une ligne fortement altérée. En effet, une ligne comportant plus de deux bits erronés n'est pas forcément corrigeable. Par contre, si les colonnes ne sont pas altérées, chaque bit de la ligne peut ainsi être corrigé grâce aux codes correcteurs d'erreurs des colonnes. De même, si une colonne est altérée alors que les lignes ne le sont pas, cette colonne pourra être corrigée grâce aux codes des lignes.

Dans l'exemple représenté sur le tableau I, I représente un premier bit (par exemple le plus significatif) d'un symbole QPSK et Q le second bit d'un tel symbole. Dans cet exemple simplifié, on présente, à l'entrée du codeur 14, deux symboles $(I_{11}, Q_{21})$ et $(I_{12}, Q_{22})$. A la sortie du codeur 14, on obtient le tableau I. A cet effet, les lignes sont codées de façon classique par un code bloc alors que les colonnes sont codées par paires.

Ainsi, après avoir effectué le codage par ligne, on obtient les deux premières lignes du tableau I. Ensuite, on effectue le codage de façon telle que l'ensemble des deux bits $I_{11}$ et $I_{12}$ fournisse l'ensemble des deux bits $I_{31}$ et $I_{32}$ et que les bits $Q_{21}$ et $Q_{22}$ fournissent les bits $Q_{41}$ et $Q_{42}$. De même, les bits $I_{33}$ et $I_{34}$ résultent du codage des bits $I_{13}$ et $I_{14}$ et on code les bits $Q_{23}$ et $Q_{24}$ de façon à obtenir les bits $Q_{43}$ et $Q_{44}$.

De cette manière, on obtient, en plus des symboles de départ : $(I_{11}, Q_{21})$ et $(I_{12}, Q_{22})$, six autres symboles, à savoir les symboles $(I_{13}, Q_{23})$, $(I_{14}, Q_{24})$, $(I_{31}, Q_{41})$, $(I_{32}, Q_{42})$, $(I_{33}, Q_{43})$ et $(I_{34}, Q_{44})$. L'ensemble de ces symboles est ainsi transmis par le canal 18.

De façon plus générale, comme représenté sur la figure 3, si au départ on prévoit $K_L$ Lignes et $K_C$ Colonnes, on ajoute $N_L - K_L$ lignes et $N_C - K_C$ colonnes. Le codage est effectué tout d'abord de façon classique par ligne, c'est-à-dire qu'à chaque ligne on ajoute des bits supplémentaires.

Le codage par colonne s'effectue de la façon suivante: on considère tout d'abord les deux premières colonnes, et dans ces colonnes les bits I : $I_{11}$, $I_{12}$; $I_{31}$, $I_{32}$, etc. se trouvant sur les lignes de rang impair. A partir de ces bits I, on détermine dans les $N_L - K_L$ lignes supplémentaires, des valeurs I qu'on dispose aussi dans les lignes de rang impair.

De même, à partir des valeurs Q : $Q_{21}$, $Q_{22}$, $Q_{41}$, $Q_{42}$, etc. se trouvant dans les lignes de rang pair, on détermine des couples de bits Q supplémentaires qu'on dispose dans les lignes de rang pair des $N_L - K_L$ lignes supplémentaires.

On procède ensuite de la même manière avec la troisième et la quatrième colonnes, la cinquième et la sixième colonnes, etc... et, dans chaque couple de colonnes, on considère l'ensemble des I, c'est-à-dire l'ensemble des symboles des lignes de rang impair, comme s'il constituait une seule colonne et on en déduit les bits de correction d'erreurs à ajouter, ces bits étant disposés dans les lignes de rang impair de l'ensemble des lignes supplémentaires $N_L - K_L$ de chaque double colonne.

De la même manière, l'ensemble des bits Q des lignes de rang pair de chaque paire de colonnes est considéré comme une seule colonne à laquelle on ajoute des bits de corrections d'erreurs qui sont disposées par paires dans les lignes de rang pair de l'ensemble $N_L - K_L$.

Bien entendu, les bits I fournissent des bits I et les bits Q fournissent des bits Q. Un couple formé par un bit I et par le bit Q suivant dans la même colonne est un symbole transmis par le canal.

Le calcul montre qu'un tel type de code produit est transparent aux rotations de $\pi$, $\pi/2$, $3\pi/2$ et $-\pi/2$. On considérera à cet effet tout d'abord la succession de Gray 00, 01,11,10.

La considération de la figure 2 montre qu'une rotation de $\pi$ donne lieu aux transformations suivantes des symboles 1 et Q :

$$I' = I \oplus 1 = \bar{I}$$

$$Q' = Q \oplus 1 = \bar{Q} \qquad (1)$$

Dans ces conditions, les valeurs restent toujours dans les mêmes codes de lignes et de colonnes et le codage reste donc transparent à une rotation de $\pi$.

Une rotation de $\pi/2$ aboutit aux relations :

$$I' = Q$$

$$Q' = I \oplus 1 = \bar{I} \qquad (2)$$

On voit qu'ainsi, avec une rotation de $\pi/2$, les lignes I sont remplacées par des lignes Q et les lignes Q sont remplacées par des lignes I inversées. Les lignes sont décodées correctement. De même, en colonnes, le fait qu'une ligne I devienne une ligne Q et réciproquement entraîne que la rotation de $\pi/2$ reste dans le code de colonnes. Ainsi, le codage produit décrit ci-dessus est transparent aux rotations de $\pi/2$.

Une rotation de $3\pi/2$ correspond aux transformations suivantes :

$$I' = Q \oplus 1 = \bar{Q}$$

$$Q' = I \qquad (3)$$

Ainsi, les lignes I sont remplacées par des lignes Q inversées ($\bar{Q}$) et les lignes Q sont remplacées par des lignes I. Les lignes sont décodées correctement et, comme dans le cas d'une rotation $\pi/2$, on voit qu'une rotation de $3\pi/2$ entraîne qu'une colonne reste dans le même code. Le codage produit décrit ci-dessus est donc également transparent aux rotations de phase de $3\pi/2$.

Le codage produit représenté sur la figure 3 est donc transparent aux rotations de phase.

Dans le cas d'une succession naturelle des symboles QPSK, une rotation de $\pi$ radians donne lieu aux équations suivantes :

$$I' = I \oplus 1 = \bar{I}$$

$$Q' = Q \tag{4}$$

Une rotation de $\pi/2$ radians aboutit aux relations :

$$I' = I \oplus Q$$

$$Q' = Q \oplus I = Q \tag{5}$$

Une rotation de $3\pi/2$ radians se traduit par :

$$I' = I \oplus Q \oplus 1$$

$$Q' = Q \oplus 1 = \bar{Q} \tag{6}$$

Les bits Q étant codés par le même code de lignes ou de colonnes et le code étant linéaire, il est transparent aux rotations $\pi$, $\pi/2$ et $3\pi/2$.

On va maintenant décrire en relation avec la figure 4 un second type de codage produit pour des symboles QPSK qui est également transparent aux rotations de phase.

Comme pour le premier mode de réalisation, on expliquera tout d'abord un exemple simple représenté sur le tableau II ci-dessous.

TABLEAU II

| $I_{11}$ | $Q_{12}$ | $I_{13}$ | $Q_{14}$ |
|---|---|---|---|
| $Q_{21}$ | $I_{22}$ | $Q_{23}$ | $I_{24}$ |
| $I_{31}$ | $Q_{32}$ | $I_{33}$ | $Q_{34}$ |
| $Q_{41}$ | $I_{42}$ | $Q_{43}$ | $I_{44}$ |

Dans cet exemple, on part de deux symboles QPSK $(I_{11}, Q_{12})$ et $(Q_{21}, I_{22})$ qu'on dispose sur deux lignes distinctes, l'un dans l'ordre naturel et l'autre dans l'ordre inverse, comme représenté, c'est-à-dire que $Q_{21}$ se trouve dans la même colonne que $I_{11}$, et $I_{22}$ se trouve dans la même colonne que $Q_{12}$.

Ensuite, on code les bits I des lignes de rangs 1 et 2 comme s'ils étaient sur la même ligne. Ils fournissent ainsi les bits $I_{13}$ et $I_{24}$ qu'on dispose sur les lignes de rangs 1 et 2, au rang 3 (c'est-à-dire dans la colonne de rang 3) sur la ligne 1 (bit $I_{13}$) et au rang 4 (colonne de rang 4) sur la ligne 2 (bit $I_{24}$).

De même, on code les bits $Q_{12}$ et $Q_{21}$ comme s'ils se trouvaient sur la même ligne et ils fournissent les bits $Q_{14}$ et $Q_{23}$ qu'on dispose aussi sur les lignes 1 et 2, aux rangs, respectivement, 4 (pour $Q_{14}$) et 3 ($Q_{23}$).

Ainsi, comme on peut le voir, les bits $I_{13}$ et $Q_{14}$ se trouvent sur la ligne numéro 1 avec la même succession IQ que les bits $I_{11}$ et $Q_{12}$ et, de même, les bits $Q_{23}$ et $I_{24}$ se trouvent sur la ligne numéro 2 avec la même succession QI que les bits $Q_{21}$ et $I_{22}$.

Le codage de colonnes s'effectue de la même manière, c'est-à-dire qu'on considère les bits $I_{11}$ et $I_{22}$ faisant partie des première et seconde colonnes qu'on code ensemble. Ils fournissent les bits $I_{31}$ et $I_{42}$ disposés, respectivement, dans la première et la seconde colonnes. De façon analogue, les bits $Q_{12}$ et $Q_{21}$ des seconde et première colonnes fournissent les bits $Q_{32}$ et $Q_{41}$ disposés, respectivement, dans la seconde et la première colonnes.

Enfin, les bits $I_{33}$ et $I_{44}$ résultent du codage en colonnes des bits $I_{13}$ et $I_{24}$ et, de même, les bits $Q_{34}$ et $Q_{43}$ résultent du codage en colonnes des bits $Q_{14}$ et $Q_{23}$.

Dans une variante, les bits $I_{31}$ et $I_{42}$ des troisième et quatrième lignes fournissent les bits de codage $I_{33}$ et $I_{44}$ disposés, respectivement, sur la troisième et la quatrième lignes et les bits $Q_{32}$ de la troisième ligne et $Q_{41}$ de la quatrième ligne fournissent les bits de codage $Q_{34}$ et $Q_{43}$ disposés, respectivement, sur la troisième et la quatrième lignes.

De façon plus générale, comme montré sur la figure 4, on part d'une matrice de symboles QPSK à $K_L$ lignes et $K_C$ colonnes. Sur les lignes de rangs impairs 1, 3, 5, etc., on dispose une suite de symboles IQ et sur les lignes 2, 4, 6, etc. de rangs pairs, on dispose une suite de symboles IQ disposés de façon inversée, c'est-à-dire que le premier bit devient le second et réciproquement. Ainsi, on dispose sur chaque ligne de rang pair une succession de QI.

A cette matrice à $K_L$ lignes et $K_C$ colonnes, on ajoute $N_L - K_L$ lignes de bits de codage et $N_C - K_C$ colonnes de codage de façon à former une matrice à $N_L$ lignes et $N_C$ colonnes.

Les bits de codage qu'on trouve dans les lignes et colonnes supplémentaires sont calculés de la même manière que décrit en relation avec le tableau II, c'est-à-dire qu'on considère tout d'abord les lignes 1 et 2 et dans ces lignes 1 et 2, on considère l'ensemble des bits 1 auxquels on affecte $N_C - K_C$ bits I de codage qu'on dispose de la même manière que dans la matrice d'origine, c'est-à-dire qu'au rang $K_C + 1$ on dispose le premier bit sur la première ligne, au rang $K_C + 2$ on dispose le second bit I sur la seconde ligne, etc. On procède de même pour le bit Q, c'est-à-dire qu'aux bits Q des lignes 1 et 2, on affecte $N_C - K_C$ bits Q de codage, le premier étant disposé sur la seconde ligne, le second sur la première ligne, le troisième sur la seconde ligne, etc.

Les lignes 3 et 4, les lignes 5 et 6, etc. sont traitées de la même manière.

Ensuite, à partir de la matrice à $K_L$ lignes et $N_C$ colonnes ainsi obtenue, on forme la matrice à $N_L$ lignes et $N_C$ colonnes en codant de façon analogue les colonnes deux par deux, c'est-à-dire qu'on code ensemble les colonnes 1 et 2, on code ensemble les colonnes 3 et 4, etc. De façon plus précise, dans chaque couple de colonnes, on considère ensemble les bits I auxquels on affecte $N_L$-$K_L$ bits de codage qui sont disposés comme les bits I dans les mêmes rangs de colonnes. Ainsi, dans le cas des colonnes 1 et 2, le premier bit I de codage est disposé dans la première colonne au rang $K_L$ + 1, le second bit de codage est disposé dans la seconde colonne au rang $K_L$ + 2, le troisième bit I de codage est disposé dans la première colonne au rang $K_L$ + 3, etc. De façon analogue, dans les deux premières colonnes, on considère les bits Q à partir desquels on forme $N_L$ - $K_L$ bits Q de codage et ces $N_L$- $K_L$ bits Q de codage sont disposés dans les première et seconde colonnes de la même manière que les bits Q de départ, c'est-à-dire que le premier bit Q de codage est disposé dans la seconde colonne au rang $K_L$ + 1, le second bit Q de codage est disposé dans la première colonne au rang $K_L$ + 2, le troisième bit Q de codage est disposé dans la seconde colonne au rang $K_L$ + 3, etc.

Comme dans le mode de réalisation de codage produit (turbocode) décrit en relation avec la figure 3, le codage produit du type de celui représenté sur la figure 4 est transparent aux rotations de $\pi$, $\pi$/2, et 3$\pi$/2 radians. Cette transparence se déduit des formules (1), (2), (3), (4), (5) et (6) ci-dessus.

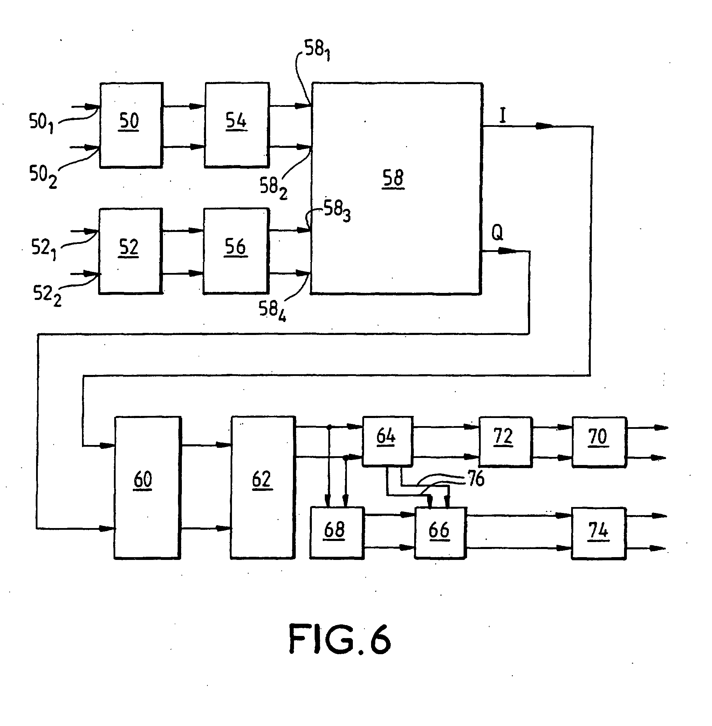

On va maintenant décrire en relation avec les figures 5 et 6 un codage produit pour une modulation QAM-16 qui est également transparent aux rotations de phase.

La modulation QAM-16 consiste à représenter les seize nombres binaires à quatre chiffres par une modulation d'amplitude et de phase d'une porteuse.

La constellation des seize nombres binaires est représentée, comme montré sur la figure 5, dans le plan complexe par seize points. Chaque point a une abscisse de ± 0,5 ou ± 1,5 et une ordonnée de ± 0,5 ou ± 1,5. Ainsi, chaque quadrant du plan complexe comporte quatre points. L'invention consiste à choisir les valeurs attribuées à chaque point dans le plan complexe de façon telle que les seize points soient répartis en quatre sous-ensembles de quatre points chacun, chaque sous-ensemble comportant un point dans chaque quadrant. En outre, ces sous-ensembles sont tels qu'une rotation de $\pi$/2 radians autour de l'origine amène un sous-ensemble à prendre la place d'un autre sous-ensemble.

Ainsi : un premier sous-ensemble, dont les points sont affectés d'un triangle sur la figure 5, est formé par les points de coordonnées (+ 1,5 ; + 1,5); (- 0,5 ; + 1,5) ; (- 0,5; - 0,5) et (+ 1,5 ; -0,5). Un second sous-ensemble, dont les points sont marqués par un carré sur la figure 5, est formé par les points de coordonnées (+ 0,5 ; + 1,5) ; (-1,5 ; + 1,5) ; (-1,5 ; - 0,5) et (+ 0,5 ; - 0,5). Le troisième sous-ensemble, dont les points sont marqués par un cercle, comprend les points de coordonnées (+ 0,5 ; + 0,5); (- 1 ,5 ; + 0,5) ; (- 1,5 ; - 1,5) et (+ 0,5 ; - 1,5). Enfin, le quatrième sous-ensemble, dont les points sont marqués par une étoile sur la figure 5, comprend les points de coordonnées : (+1,5 ; +0,5) ; (- 0,5 ; + 0,5) ; (- 0,5 ; - 1,5) et (+ 1 ,5 ; - 1,5).

Ainsi, les quatre points de chaque sous-ensemble forment un carré et une rotation de $\pi$/2 radians a pour conséquence que le premier sous-ensemble prend la position du second sous-ensemble, le second sous-ensemble prend la position du troisième sous-ensemble, le troisième sous-ensemble prend la position du quatrième sous-ensemble et le quatrième sous-ensemble prend la position du premier sous-ensemble.

En outre, on choisit les nombres dans chaque sous-ensemble de façon telle que les deux premiers bits (les bits les plus significatifs) soient les mêmes et que les deux derniers bits (les moins significatifs) forment des nombres différents, par exemple selon une succession de Gray.

Ainsi, le premier sous-ensemble (dont les points sont marqués par un triangle) a les mêmes deux premiers chiffres 00 et la succession des deux derniers chiffres, en partant du premier quadrant, et dans le sens positif, est : 00, 01, 11, 10. Pour le second sous-ensemble dont les points sont marqués par un rectangle, les deux premiers chiffres sont 01, pour le troisième sous-ensemble, dont les points sont marqués par un cercle, les deux premiers chiffres sont 11 et pour le quatrième sous-ensemble, dont les points sont marqués par une étoile, les deux premiers chiffres sont 10.

On remarque aussi que, dans chaque quadrant, les deux derniers chiffres sont les mêmes. Ainsi, le premier quadrant comporte des symboles appartenant aux premier, second, troisième et quatrième sous-ensembles dont les deux derniers chiffres sont 00. Dans le second quadrant les deux derniers chiffres sont 01, dans le troisième quadrant, les deux derniers chiffres sont 11, et dans le quatrième quadrant les deux derniers chiffres sont 10.

Cette répartition en quatre sous-ensembles tels qu'une rotation de ± K$\pi$/2 radians (K étant un entier) a pour conséquence qu'un sous-ensemble occupe l'emplacement d'un autre sous-ensemble, a pour résultat que si les mots à transmettre sont affectés d'un code correcteur d'erreurs du type transparent aux rotations de phase, tels que les codes produits décrits ci-dessus pour la modulation QPSK, les données modulées en QAM-16 seront également transparentes aux rotations de phase.

Ainsi, si on sépare chaque nombre binaire à quatre chiffres en deux nombres binaires à deux chiffres et si on affecte à chacun de ces nombres binaires à deux chiffres un turbocode transparent aux rotations de phase, comme si chacun de ces deux nombres devait être transmis en modulation QPSK, on obtiendra le résultat souhaité, c'est-à-dire un turbo code transparent aux rotations de phase.

En variante, on fait appel à un turbocode classique du type BPSK transparent aux rotations de phase, c'est-à-dire qu'on effectue le codage correcteur d'erreurs individuellement pour chaque bit.

Ainsi, avec la combinaison d'un code correcteur d'erreurs attribué à chaque bit ou à chaque couple de bits qui est du type transparent aux rotations de phase et la répartition des nombres à quatre chiffres binaires dans le plan complexe comme décrit ci-dessus, pour la transmission en modulation de phase et d'amplitude QAM-16 on obtient une transmission transparente aux rotations de phase, notamment avec un code correcteur d'erreurs de type turbo.

La figure 6 représente des moyens de transmission conformes à l'invention.

Ces moyens de transmission comprennent deux codeurs différentiels à deux dimensions, respectivement 50 et 52. Chacun de ces codeurs différentiels est du même type que le codeur 12 représenté sur la figure 1. Sur les deux entrées $50_1$ et $50_2$ du codeur 50, on applique les deux premiers bits de chaque nombre binaire à quatre chiffres et sur les deux entrées $52_1$, $52_2$ du codeur différentiel 52, on applique les deux derniers bits du même nombre à quatre chiffres. Chaque codeur différentiel effectue la différence entre deux nombres à deux chiffres successifs

Les deux chiffres binaires délivrés par chacun des codeurs différentiels 50, 52 sont soumis à un codage turbo transparent aux rotations de phase grâce à des codeurs, respectivement 54 et 56. Les codages effectués par ces codeurs 54 et 56 sont soit du type BPSK, c'est-à-dire que le codage s'effectue individuellement sur chaque bit, soit du type QPSK comme décrit en relation avec la figure 3 ou la figure 4, les deux bits étant donc considérés collectivement.

Ensuite, les deux bits de sortie de chacun des codeurs 54 et 56 sont appliqués sur des entrées, respectivement, $58_1$, $58_2$ et $58_3$, $58_4$ d'un modulateur 58 de phase et d'amplitude du type QAM-16 qui répartit les nombres binaires à quatre chiffres ainsi appliqués sur ces entrées dans le plan complexe comme représenté sur la figure 5.

Les signaux modulés fournis par le modulateur 58 sont transmis par un canal 60 et sont reçus par un démodulateur 62 effectuant l'opération inverse de celle réalisée par le modulateur 58, c'est-à-dire déterminant les symboles (nombres binaires à quatre chiffres) à partir des phases et des amplitudes des signaux reçus. Dans cet exemple, le démodulateur 62 comporte deux sorties $62_1$, $62_2$ qui délivrent des signaux numériques, d'une part, à un premier décodeur turbo 64 et, d'autre part, à un second décodeur turbo 66 par l'intermédiaire d'un élément de retard 68. Les signaux de sortie du premier décodeur 64 sont transmis à un premier décodeur différentiel 70 à deux dimensions par l'intermédiaire d'un second élément de retard 72 et le second décodeur 66 transmet directement, dans l'exemple, ses signaux de sortie à un second décodeur différentiel 74 à deux dimensions.

Les éléments de retard 68 et 72 ainsi qu'une connexion 76 entre les deux décodeurs 64 et 66 permettent de synchroniser les signaux de sortie des décodeurs différentiels 70 et 74.

Il est à noter que la répartition, représentée sur la figure 5, des nombres binaires à quatre chiffres en modulation QAM-16 dans le plan complexe permet, de façon générale, une transparence aux rotations de phase de $\pm$ K $\pi/2$ (K entier) à condition que les codes correcteurs d'erreurs ajoutés soient également transparents aux rotations de phase. Ces codes correcteurs d'erreur peuvent être soit du type bloc, c'est-à-dire ligne par ligne, soit du type turbo ou produit.

**Revendications**

1. Procédé de transmission de signaux numériques du type à modulation de phase à quatre états, QPSK, dans lequel on affecte à chaque symbole à deux bits une phase d'une porteuse, chacun des quatre symboles à deux bits correspondant à un quadrant du plan complexe, et dans lequel, pour un ensemble de bits, on ajoute des bits supplémentaires permettant une correction d'erreurs à la réception,
    **caractérisé en ce que** le codage de correction d'erreurs étant de type produit, pour obtenir une transparence aux rotations de phase, les deux bits l et Q d'un symbole à deux bits à transmettre sont disposés sur des lignes différentes, mais sur la même colonne, et de façon telle que chaque ligne ne comporte qu'un seul type de bits, 1 ou Q, le codage pour la correction d'erreurs étant effectué :

    ligne par ligne, et
    par paire de colonnes adjacentes, les bits l de codage de deux colonnes adjacentes associées étant déduits des bits I de ces deux colonnes et, de même, les bits Q de codage de ces deux colonnes adjacentes associées étant déduits des bits Q de ces colonnes, ces bits de codage étant disposés de la même façon que les bits de départ, c'est-à-dire de manière que chaque ligne ne comporte qu'un seul type de bits, l ou Q,
    les couples de bits de codage I et Q adjacents sur une même colonne étant transmis comme les autres symboles.

2. Procédé de transmission de signaux numériques du type à modulation de phase à quatre états, QPSK, dans lequel on affecte à chaque symbole, à deux bits une phase d'une porteuse, chacun des quatre symboles à deux bits correspondant à un quadrant du plan complexe et dans lequel, pour un ensemble de bits, ajoute des bits supplémentaires permettant une correction d'erreurs à la réception,
    **caractérisé en ce que** le codage de correction d'erreurs étant du type produit, pour le codage des symboles à transmettre afin d'obtenir une transparence aux rotations de phase, on dispose les deux bits I et Q d'un symbole sur une même ligne, chacune des lignes étant ainsi formée de couples de bits I et Q, les lignes et les colonnes étant disposées de façon telle que, dans chaque colonne, les bits I et Q soient alternés, les lignes et les colonnes étant codées par paires adjacentes de façon telle que les bits de codage I soient , dérivés des bits I de deux lignes ou colonnes adjacentes associées et que, de même, les bits de codage Q de ces deux lignes ou colonnes adjacentes soient dérivés seulement des bits Q de ces deux lignes ou colonnes, les bits de codage étant disposés comme les bits d'origine,

et **en ce que** les couples de bits I et Q de codage sur chaque ligne sont transmis comme les autres symboles.

**3.** Procédé selon la revendication 1 ou 2, **caractérisé en ce que**, dans le plan complexe, les symboles forment une succession naturelle ou une succession de Gray.

**4.** Procédé selon l'une quelconque des revendications 1 à 3, **caractérisé en ce qu'**avant le codage de correction d'erreurs, les symboles sont soumis à un codage différentiel de façon à transmettre la différence entre deux symboles successifs.

**5.** Procédé selon l'une quelconque des revendications précédentes appliqué à la transmission de signaux numériques par modulation de phase et d'amplitude à seize états qui consiste à représenter un symbole à quatre bits par la phase et l'amplitude d'une porteuse, le codage de correction d'erreurs étant effectué sur les deux premiers et les deux derniers bits.

**6.** Procédé selon la revendication 5, **caractérisé en ce que** pour la transmission, les seize symboles à quatre bits sont, dans le plan complexe, répartis de façon telle que chaque quadrant comporte quatre symboles comportant deux premiers bits représentant des symboles différents et les mêmes deux derniers bits, et **en ce qu'**on répartit dans l'ensemble du plan complexe ces seize symboles en quatre sous-ensembles, chaque sous-ensemble étant formé par l'ensemble des symboles ayant les mêmes deux premiers bits et se trouvant dans les quatre quadrants différents, les coordonnées des symboles dans le plan complexe étant choisies de façon telle qu'après une rotation de $\pm k\pi/2$, k étant un entier, chaque sous-ensemble prend la place d'un autre sous-ensemble.

**7.** Procédé de réception de signaux numériques du type à modulation de phase à quatre états, QPSK, transmis selon le procédé de transmission suivant l'une quelconque des revendications 1 à 4 dans lequel on effectue un décodage inverse du codage de correction d'erreur effectué lors de la transmission.

## Claims

**1.** A method of transmitting QPSK digital signals in which each 2-bit symbol, is assigned a phase of a carrier, each of the four 2-bit symbols corresponds to a quadrant of the complex plane, and supplementary bits are added to a set of bits to enable error correction at the receiver,

**characterized in that**, the error correction code being a product code, to obtain transparency to phase rotations, the I and Q bits of a 2-bit symbol to be transmitted are placed in different rows but in the same column, so that each row contains only one type of bit, I or Q, the error correction coding is effected:

row by row, and
by pairs of adjacent columns,

the code I bits of two associated adjacent columns are deduced from the I bits of said two columns, the code Q bits of said two associated adjacent columns are similarly deduced from the Q bits of said columns, said coded bits are disposed in the same fashion as the starting bits, i.e. so that each row contains only one type of bit, I or Q, and the pairs adjacent code I and Q bits in the same column are transmitted like the other symbols.

**2.** A method of transmitting QPSK digital signals in which each 2-bit symbol, is assigned a phase of a carrier, each of the four 2-bit symbols corresponds to a quadrant of the complex plane, and supplementary bits are added to a set of bits to enable error correction at the receiver,

**characterized in that** the error correction code being a product code, for coding symbols to be transmitted to obtain transparency to phase rotations, the I bits and Q of a symbol are placed in the same row, so that each of the rows is formed of pairs of I and Q bits, the rows and the columns are disposed so that, in each column, the I and Q bits alternate, the rows and the columns are coded by adjacent pairs so that the code I bits are derived from the I bits of two associated adjacent rows or columns, the code Q bits of said two adjacent rows or columns are similarly derived only from the Q bits of said two rows or columns, the code bits are disposed like the starting bits, and the pairs of code I and Q bits in each row are transmitted like the other symbols.

3. A method according to claim 1 or claim 2, **characterized in that** the symbols form a natural succession or a Gray succession in a complex plane.

4. A method according to any one of claims 1 to 3, **characterized in that** the symbols undergo differential coding before error correction coding in order to transmit the difference between two successive symbols.

5. A method according to any preceding claim applied to transmitting QAM-16 digital signals, which method consists of representing a 4-bit symbol by the phase and the amplitude of a carrier and effecting error correction coding on the first two binary digits and the last two bits.

6. A method according to claim 5, **characterized in that**, for transmission, the sixteen 4-bit symbols are arranged in a complex plane so that each quadrant contains four symbols having two first bits representing different symbols and the same last two bits, said sixteen symbols are arranged in four subsets in the four quadrants of the complex plane and over the whole of the complex plane, each subset is formed by the set of symbols having the same first two bits, and the coordinates of the symbols in the complex plane are chosen so that after a rotation of $\pm K\pi/2$, where K is an integer, each subset takes the place of another subset.

7. A method of receiving QPSK digital signals transmitted by the transmission method according to any one of claims 1 to 4, which method includes decoding that is the inverse of the error correction coding effected at the transmitter.

**Patentansprüche**

1. Verfahren zum Senden digitaler Signale mit Quadratur-Phasenmodulation QPSK, bei dem man jedem Symbol zwei Bits der Phase einer Trägerfrequenz zuweist, wobei jedes der vier aus 2 Bits bestehenden Symbole einem Quadranten einer komplexen Ebene entspricht, und bei dem für eine Bitmenge Zusatzbits hinzugefügt werden, die eine Fehlerkorrektur beim Empfangen ermöglichen;
   **dadurch gekennzeichnet, dass** die Fehlerkorrekturcodierung dem Produkttyp entspricht, um eine Transparenz gegenüber den Phasenrotationen zu erzielen, wobei die beiden Bits I und Q eines zu sendenden Zwei-Bit-Symbols in verschiedenen Zeilen, jedoch in derselben Spalte angeordnet sind, so dass jede Zeile nur einen einzigen Bittyp - I oder Q - enthält und wobei die Fehlerkorrektur:

   Zeile für Zeile und
   paarweise für benachbarte Spalten erfolgt, wobei die I-Korrekturbits von zwei zueinander gehörenden benachbarten Spalten von den I-Bits dieser beiden Spalten abgezogen werden, und ebenso werden die Q-Codierungsbits dieser beiden zueinander gehörenden benachbarten Spalten von den Q-Bits dieser Spalten abgezogen, wobei diese Codierungsbits genauso wie die Anfangsbits angeordnet sind, das heißt so, dass jede Zeile nur einen einzigen Bittyp - I oder Q - aufweist;
   hierbei werden die Paare von benachbarten I- und Q-Codierungsbits in derselben Spalte wie die die anderen Symbole übertragen.

2. Verfahren zum Senden digitaler Signale mit Quadratur-Phasenmodulation QPSK, bei dem man jedem Symbol zwei Bits der Phase einer Trägerfrequenz zuweist, wobei jedes der vier aus 2 Bits bestehenden Symbole einem Quadranten einer komplexen Ebene entspricht, und bei dem für eine Bitmenge Zusatzbits hinzugefügt werden, die eine Fehlerkorrektur beim Empfangen ermöglichen;
   **dadurch gekennzeichnet, dass** die Fehlerkorrekturcodierung dem Produkttyp entspricht; für die Codierung der zu übertragenden Symbole ordnet man, um eine Transparenz gegenüber den Phasenrotationen zu erzielen, die beiden Bits I und Q eines Symbols in derselben Zeile an, wobei jede der Zeilen so aus Paaren von I- und Q-Bits gebildet wird; die Zeilen und die Spalten sind hierbei so angeordnet, dass in jeder Spalte die I- und Q-Bits einander abwechseln, wobei die Zeilen und die Spalten in benachbarten Paaren so codiert sind, dass die I-Codierungsbits aus den I-Bits von zwei zueinander gehörenden benachbarten Zeilen oder Spalten abgeleitet werden und dass ebenso die Q-Codierungsbits dieser beiden benachbarten Zeilen oder Spalten nur als den Q-Bits dieser beiden Zeilen oder Spalten abgeleitet werden, wobei die Codierungsbits wie die ursprünglichen Bits angeordnet sind;
   und dadurch, dass die Paare von I- und Q-Codierungsbits in jeder Zeile wie die anderen Symbole übertragen werden.

3. Verfahren nach Anspruch 1 oder 2, **dadurch gekennzeichnet, dass** in der komplexen Ebene die Symbole eine natürliche Folge oder eine Gray-Folge bilden.

4. Verfahren nach einem beliebigen der Ansprüche 1 bis 3, **dadurch gekennzeichnet, dass** die Symbole vor der Fehlerkorrekturcodierung einer Differenzcodierung unterzogen werden, so dass die Differenz zwischen zwei aufeinander folgenden Symbolen übertragen wird.

**5.** Verfahren nach einem beliebigen der vorhergehenden Ansprüche, angewendet auf das Senden digitaler Signale durch Quadratur-Amplitudenmodulation (16-QAM), das darin besteht, ein aus vier Bits bestehendes Symbol durch die Phase und die Amplitude einer Trägerfrequenz darzustellen, wobei die Fehlerkorrekturcodierung an den zwei ersten und den zwei letzten Bits durchgeführt wird.

**6.** Verfahren nach Anspruch 5, **dadurch gekennzeichnet, dass** für das Senden die sechzehn Vier-Bit-Symbole in der komplexen Ebene so verteilt sind, dass jeder Quadrant vier Symbole enthält, die zwei erste Bits, welche verschiedene Symbole darstellen, sowie identische zwei letzte Bits aufweisen, und dadurch, dass man diese sechzehn Symbole in der gesamten komplexen Ebene in vier Untermengen aufteilt, wobei jede Untermenge von der Menge der Symbole gebildet wird, die dieselben zwei ersten Bits aufweisen und sich in den vier verschiedenen Quadranten befinden, und wobei die Koordinaten der Symbole in der komplexen Ebene so gewählt werden, dass nach einer Rotation um $\pm K\pi/2$, wobei K eine ganze Zahl ist, jede Untermenge den Platz einer anderen Untermenge einnimmt.

**7.** Verfahren zum Empfangen digitaler Signale mit Quadratur-Phasenmodulation QPSK, wobei die Signale mit einem Sendeverfahren nach einem beliebigen der Ansprüche 1 bis 4 übertragen werden, bei dem man eine Decodierung umgekehrt zu der beim Senden durchgeführten Fehlerkorrekturcodierung vornimmt.

FIG.1

FIG.2

FIG.3

FIG.4

FIG.5

FIG.6